# EUROPÄISCHE PATENTANMELDUNG

(11) **EP 1 452 459 A1**
(43) Veröffentlichungstag der Anmeldung: **01.09.2004**
(21) Anmeldenummer: 04100741.0
(22) Anmeldetag: 25.02.2004
(51) Int. Cl.: B65D 81/38, B65D 21/08

(54) **Isoliergefäss**

(30) Priorität: 27.02.2003 DE 20303168 U
(71) Anmelder: Berbrich, Stefanie, 27612 Overwarfe (DE); Kornau, Jasmin, Bremen 28755 (DE); Rattay, Benedikt, 49406 Barnstorf (DE)
(72) Erfinder: Berbrich, Stefanie, 27612 Overwarfe (DE); Kornau, Jasmin, Bremen 28755 (DE); Rattay, Benedikt, 49406 Barnstorf (DE)
(74) Vertreter: von Ahsen, Erwin-Detlef

(57) **Zusammenfassung**

Die Erfindung betrifft ein Isoliergefäß, insbesondere zur Aufnahme von Getränken, bestehend aus einem Gehäuse mit einem zusätzlichen innenliegenden Aufnahmebehältnis sowie einer verschließbaren Öffnung. Das Isoliergefäß ist dadurch gekennzeichnet, daß das Gehäuse (1) durch mehrere teleskopartig ineinandergreifende Gehäuseteile (2, 3, 4, 5) gebildet und das innenliegende Aufnahmebehältnis als faltbares Beutelelement (8) ausgebildet ist.

## Beschreibung

Die Neuerung bezieht sich auf ein Isoliergefäß, insbesondere zur Aufnahme von Getränken, bestehend aus einem Gehäuse mit einem zusätzlichen innenliegenden Aufnahmebehältnis sowie einer verschließbaren Öffnung.

Anordnungen dieser Art sind in vielfältigen Ausführungen bekannt. Dabei besteht der Mangel, daß im gefüllten und leeren Zustand des Isoliergefäßes der Platzbedarf gleich ist. Hierbei erscheint es besonders bei einer Aufnahme in Rucksäcken und Tragetaschen nachteilig, daß der erforderliche Platzbedarf im leeren Zustand unnötig eingenommen und nicht anderweitig nutzbar ist.

Die Aufgabe der Neuerung ist es, auf einfache Weise den Platzbedarf des lsoliergefäßes, insbesondere im leeren Zustand, für Transportzwecke und auch für die Lagerung zu reduzieren.

Die Lösung dieser Aufgabe erfolgt neuerungsgemäß dadurch, daß das Gehäuse durch mehrere teleskopartig ineinandergreifende Gehäuseteile gebildet und das innere Aufnahmebehältnis als faltbares Beutelelement gebildet ist.

Hierdurch ist es möglich, das Isoliergefäß einmal für ein Aufnahmevolumen in der ausgefahrenen Stellung einzusetzen und zum anderen nach der Entleerung auf ein Minimum zusammenzuschieben. Hierbei paßt sich das Beutelelement in der zusammengeschobenen Stellung entsprechend an und steht anschließend im ausgefahrenen Zustand mit seinem gesamten Aufnahmevolumen wieder zur Verfügung.

Eine vorteilhafte Ausbildung besteht darin, daß das untere Gehäuseteil als becherartiges Grundelement ausgebildet ist, das die weiteren zugeordneten rohrförmig ineinandergreifenden Gehäuseteile in der zusammengeschobenen Position aufnimmt.

Femer wird zur Fixierung vorgeschlagen, daß die einzelnen Gehäuseteile in der ausgefahrenen Position über Verriegelungselemente miteinander koppelbar sind.

Zur Verbesserung einer Isolierung wird vorgeschlagen, daß das Beutelelement mit einer, vorzugsweise verspiegelten, Isolierfolie versehen ist. Das Beutelelement kann auch einen mehrlagigen Aufbau haben, wobei zwischen zwei Folienlagen eine, insbesondere flexible, Gitterstruktur angeordnet ist. Durch diesen mehrlagigen Aufbau ergibt sich eine gute Isolationswirkung bei hoher Stabilität. Als Material für die äußeren Folienlagen kann Capton oder Mylar verwendet werden. Es kann aber auch ein anderes Material mit ähnlichen Eigenschaften verwendet werden. Das Material der äußeren Folienlagen sollte aber in jedem Fall lebensmittelecht sein.

Weiterhin ist vorgesehen, daß die Gehäuseteile mit einer innenliegenden Isolierschicht versehen sind. Die Gehäuseteile können aber auch doppelwandig ausgebildet sein. Vorzugsweise ist dann eine Isolierschicht, insbesondere eine Vakuumisolierschicht, vorgesehen.

Um die Einstellung in die einzelnen Lagen durchzuführen, wird vorgeschlagen, daß im Bereich der Öffnung im obenliegenden Gehäuseteil ein Ausziehhilfselement angeordnet ist.

Ferner ist vorgesehen, daß die Öffnung mit einem verriegelbaren Trinkbecher als Ausziehhilfe verschließbar ist.

In der Zeichnung ist ein Ausführungsbeispiel der Erfindung schematisch dargestellt. Es zeigen:

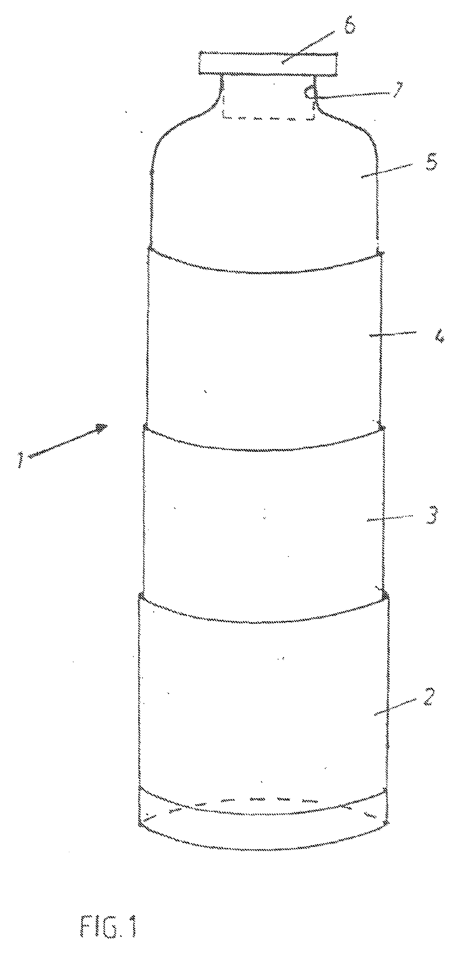

- Fig. 1: eine Seitenansicht auf ein Isoliergefäß mit ihrem größten Aufnahmevolumen,

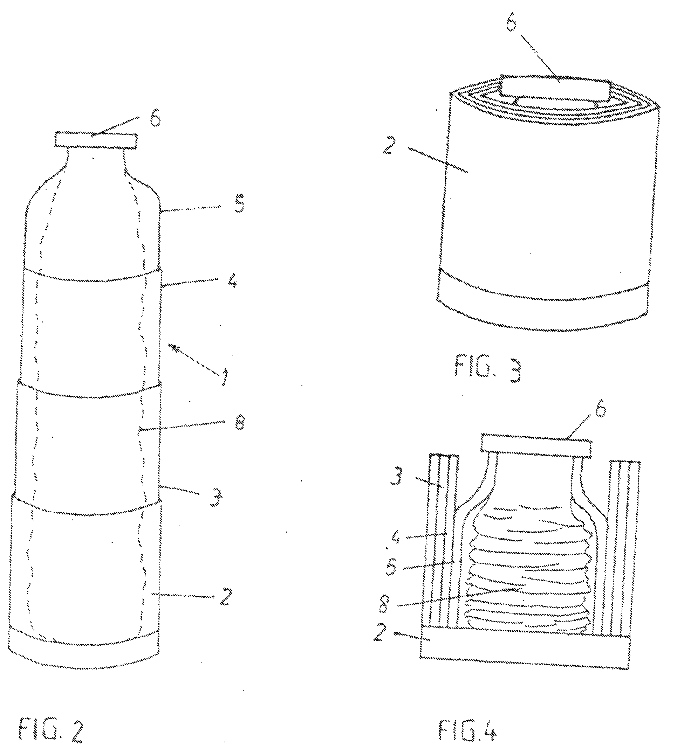

- Fig. 2: eine Seitenansicht nach Fig. 1 mit aufgenommenem faltbaren Beutetelement,
- Fig. 3: eine Seitenansicht des Isoliergefäßes im zusammengeschobenen Zustand und
- Fig. 4: eine Schnittdarstellung gemäß Fig. 3.

Bei der gezeigten Ausbildung ist das Gehäuse 1 durch mehrere teleskopartige ineinandergreifende Gehäuseteile 2, 3, 4, 5 gebildet. Hierbei nimmt das untere Gehäuseteil 2 als Becherelement die rohrartig ausgebildeten Gehäuseteile 3, 4 und 5 in der zusammengeschobenen Position auf, wobei das Gehäuseteil 5 eine über einen Abschlußstopfen 6 verschließbare Öffnung 7 aufweist.

Als innenliegendes Aufnahmebehältnis ist ein faltbares Beutelelement 8, ausgehend von der Öffnung 7, angeordnet. In der zusammengeschobenen Position paßt sich das Beutelelement 8 den Verhältnissen entsprechend an.

Selbstverständlich ist es möglich, die einzelnen Gehäuseteile 2, 3, 4, 5 in der ausgefahrenen Stellung über nicht näher dargestellte Elemente gegeneinander zu verriegeln. Es ist auch denkbar, daß das Aufnahmebehältnis austauschbar angeordnet ist.

### Bezugszeichenliste:

- 1: Gehäuse
- 2: Gehäuseteil
- 3: Gehäuseteil
- 4: Gehäuseteil
- 5: Gehäuseteil
- 6: Abschlußstopfen
- 7: Öffnung
- 8: Beutelelement

## Patentansprüche

1. Isoliergefäß, insbesondere zur Aufnahme von Getränken, bestehend aus einem Gehäuse mit einem zusätzlichen innenliegenden Aufnahmebehältnis sowie einer verschließbaren Öffnung, **dadurch gekennzeichnet, daß** das Gehäuse (1) durch mehrere teleskopartig ineinandergreifende Gehäuseteile (2, 3, 4, 5) gebildet und das innenliegende Aufnahmebehältnis als faltbares Beutelelement (8) ausgebildet ist.

2. Isoliergefäß nach Anspruch 1, **dadurch gekennzeichnet, daß** das untere Gehäuseteil (2) als becherartiges Grundelement ausgebildet ist, das die weiteren zugeordneten rohrförmig ineinandergreifenden Gehäuseteile (3, 4, 5) in der zusammengeschobenen Position aufnimmt.

3. Isoliergefäß nach Anspruch 1 oder 2, **dadurch gekennzeichnet, daß** die einzelnen Gehäuseteile (2, 3, 4, 5) in der ausgefahrenen Position über Verriegelungselemente miteinander koppelbar sind.

4. Isoliergefäß nach einem der Ansprüche 1 bis 3, **dadurch gekennzeichnet, daß** das Beutelelement (8) mit einer, vorzugsweise verspiegelten, Isolierfolie versehen ist.

5. Isoliergefäß nach einem der vorhergehenden Ansprüche, **dadurch gekennzeichnet, daß** das Beutelelement (8) einen mehrlagigen Aufbau hat, wobei zwischen zwei Folienlagen eine, insbesondere flexible, Gitterstruktur angeordnet ist.

6. Isoliergefäß nach einem der Ansprüche 1 bis 5, **dadurch gekennzeichnet, daß** die Gehäuseteile (2, 3, 4, 5) mit einer innenliegenden Isolierschicht versehen sind.

7. Isoliergefäß nach einem der vorhergehenden Ansprüche, **dadurch gekennzeichnet, daß** die Gehäuseteile (2, 3, 4, 5) doppelwandig ausgebildet sind und vorzugsweise eine Isolierschicht, insbesondere eine Vakuumisolierschicht, aufweisen.

8. Isoliergefäß nach einem der Ansprüche 1 bis 7, **dadurch gekennzeichnet, daß** im Bereich der Öffnung (7) im obenliegenden Gehäuseteil (5) ein Ausziehhilfselement angeordnet ist.

9. Isoliergefäß nach einem der Ansprüche 1 bis 8, **dadurch gekennzeichnet, daß** die Öffnung (7) mit einem verriegelbaren Trinkbecher als Ausziehhilfe verschließbar ist.
